# EUROPEAN PATENT APPLICATION

(11) **EP 4 819 679 A1**
(43) Date of publication of application: **07.10.2026**
(21) Application number: 24898238.1
(22) Date of filing: 29.11.2024
(51) Int. Cl.: H04W 24/10, H04W 72/23, H04W 24/08, H04W 48/14, H04J 11/00, H04L 5/00, H04W 52/02, H04W 84/12

(54) **METHOD AND APPARATUS FOR UTILIZING ON-DEMAND SYNCHRONIZATION SIGNAL BLOCK IN WIRELESS COMMUNICATION SYSTEM**

(30) Priority: 01.12.2023 US 202363604902 P
(71) Applicant: LG Electronics Inc., Yeongdeungpo-gu Seoul 07336 (KR)
(72) Inventor: LEE, Youngdae, Seoul 06772 (KR); KIM, Seonwook, Seoul 06772 (KR); YANG, Suckchel, Seoul 06772 (KR); MYUNG, Sechang, Seoul 06772 (KR)
(74) Representative: Plasseraud IP
(86) International application number: PCT/KR2024/019376
(87) International publication number: WO 2025/116646

(57) **Abstract**

A method and a device for reporting channel state information in a wireless communication system are disclosed. A method performed by a terminal, according to one embodiment of the present disclosure, may comprise the steps of: receiving measurement-related settings from a base station; performing measurement on a first reference signal and a second reference signal on the basis of the measurement-related settings; and transmitting, for a specific cell, report information including a measurement result on at least one of the first reference signal and the second reference signal. Here, the first reference signal and the second reference signal may be set as the same measurement target in the measurement-related settings.

## Description

### [TECHNICAL FIELD]

The present disclosure relates to a wireless communication system, and more specifically to a method and apparatus for utilizing an on-demand synchronization signal block (SSB) in a wireless communication system.

### [BACKGROUND ART]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

### [Disclosure]

### [Technical Problem]

The technical object of the present disclosure is to provide a method and apparatus for utilizing an on-demand synchronization signal block (SSB) in a wireless communication system.

The technical objects to be achieved by the present disclosure are not limited to the above-described technical objects, and other technical objects which are not described herein will be clearly understood by those skilled in the pertinent art from the following description.

### [Technical Solution]

A method performed by a UE in a wireless communication system according to an aspect of the present disclosure may comprise: receiving a measurement-related configuration from a base station; performing measurement on a first reference signal and a second reference signal based on the measurement-related configuration; and transmitting, for a specific cell, report information including a measurement result for at least one of the first reference signal or the second reference signal. Herein, the first reference signal and the second reference signal may be configured as a same measurement object in the measurement-related configuration, and the first reference signal may correspond to an on-demand synchronization signal block in the specific cell, and the second reference signal may correspond to a specific reference signal based on a configuration different from a configuration for the on-demand synchronization signal block.

A method performed by a base station in a wireless communication system according to an additional aspect of the present disclosure may comprise: transmitting, to a UE, a measurement-related configuration; and based on the measurement-related configuration, receiving, for a specific cell, report information including a measurement result for at least one of a first reference signal or a second reference signal. Herein, the first reference signal and the second reference signal may be configured as a same measurement object in the measurement-related configuration, and the first reference signal may correspond to an on-demand synchronization signal block in the specific cell, and the second reference signal may correspond to a specific reference signal based on a configuration different from a configuration for the on-demand synchronization signal block.

### [Technical Effects]

According to various embodiments of the present disclosure, a method and apparatus for utilizing an on-demand synchronization signal block (SSB) in a wireless communication system may be provided.

According to various embodiments of the present disclosure, a user equipment may receive an additional reference signal (RS) when measuring an on-demand SSB, thereby providing a technical effect that supports base station energy saving due to on-demand SSB transmission.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 illustrates an SSB transmission method of a base station operating multiple frequency bands applicable to the present disclosure.
FIG. 8 illustrates an on-demand SSB related procedure applicable to the present disclosure.
FIG. 9 is a diagram illustrating the operation of a user equipment according to an embodiment of the present disclosure.
FIG. 10 is a diagram illustrating the operation of a base station according to an embodiment of the present disclosure.
FIG. 11 illustrates a block diagram of a wireless communication device according to an embodiment of the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The technology described in the present specification may be used in various wireless communication systems such as code division multiple access (CDMA), frequency division multiple access (FDMA), time division multiple access (TDMA), orthogonal frequency division multiple access (OFDMA), and single carrier frequency division multiple access (SC-FDMA). CDMA may be implemented by a wireless technology such as universal terrestrial radio access (UTRA) or CDMA2000. TDMA may be implemented by a wireless technology such as global system for mobile communications (GSM)/ general packet radio service (GPRS)/ enhanced data rates for GSM evolution (EDGE). OFDMA may be implemented by a wireless technology such as institute of electrical and electronics engineers (IEEE) 802.11 (Wi-Fi), IEEE 802.16 (WiMAX), IEEE 802-20, evolved UTRA (E-UTRA), long term evolution (LTE), and 5G NR.

The technology described in the present specification may be implemented by 6G wireless technology, and may be applied to various 6G systems. For example, a 6G system may have key factors such as enhanced mobile broadband (eMBB), ultra-reliable low latency communications (URLLC), massive machine-type communication (mMTC), artificial intelligence (AI) integrated communication, tactile internet, high throughput, high network capacity, high energy efficiency, low backhaul and access network congestion, and enhanced data security.

To clarify description, it is described based on a 3GPP communication system (e.g., LTE-A, NR, 6G), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR/6G may be referred to as a 3GPP system. "xxx" means a detailed number for a standard document. LTE/NR/6G may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.
BM: beam management
CQI: Channel Quality Indicator
CRI: channel state information - reference signal resource indicator
CSI: channel state information
CSI-IM: channel state information - interference measurement
CSI-RS: channel state information - reference signal
DMRS: demodulation reference signal
FDM: frequency division multiplexing
FFT: fast Fourier transform
IFDMA: interleaved frequency division multiple access
IFFT: inverse fast Fourier transform
L1-RSRP: Layer 1 reference signal received power
L1-RSRQ: Layer 1 reference signal received quality
MAC: medium access control
NZP: non-zero power
OFDM: orthogonal frequency division multiplexing
PDCCH: physical downlink control channel
PDSCH: physical downlink shared channel
PMI: precoding matrix indicator
RE: resource element
RI: Rank indicator
RRC: radio resource control
RSSI: received signal strength indicator
Rx: Reception
QCL: quasi co-location
SINR: signal to interference and noise ratio
SSB (or SS/PBCH block): Synchronization signal block (including PSS (primary synchronization signal), SSS (secondary synchronization signal) and PBCH (physical broadcast channel))
TDM: time division multiplexing
TRP: transmission and reception point
TRS: tracking reference signal
Tx: transmission
UE: user equipment
ZP: zero power

### Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

The aforementioned NR system is a new clean-slate type mobile communication system as a successor technology of long term evolution (LTE), having characteristics such as high performance, low latency, and high availability. In the case of the NR system, all available spectrum resources can be utilized, such as a low frequency band below 1 GHz, a mid-frequency band of 1 GHz to 10 GHz, and a high frequency (millimeter wave) band of 24 GHz or higher. Based on the fundamental technology of the NR system, a 6G mobile communication system (hereinafter, 6G system) is being developed.

The 6G system is aimed at (i) a very high data rate per device, (ii) a very large number of connected devices, (iii) global connectivity, (iv) very low latency, (v) reduction of energy consumption of battery-free internet of things (IoT) devices, (vi) ultra-reliable connectivity, and (vii) connected intelligence having machine learning capability. The vision of the 6G system may be four aspects such as intelligent connectivity, deep connectivity, holographic connectivity, and ubiquitous connectivity.

The NR system and a new RAT system (hereinafter, next-generation RAT system) including the 6G system uses an OFDM transmission scheme or a transmission scheme similar thereto. The next-generation RAT system may follow OFDM parameters different from OFDM parameters of LTE. Alternatively, the next-generation RAT system may follow the numerology of the existing LTE/LTE-A as it is, but may support a larger system bandwidth (e.g., 100 MHz). Alternatively, one cell may support a plurality of numerologies. That is, terminals operating with different numerologies may coexist in one cell.

A numerology corresponds to one subcarrier spacing in a frequency domain. As a reference subcarrier spacing is scaled by an integer N, a different numerology may be defined.

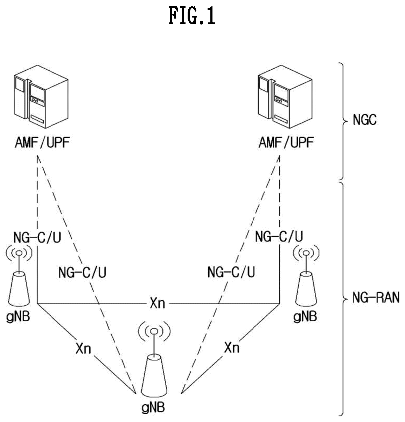

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

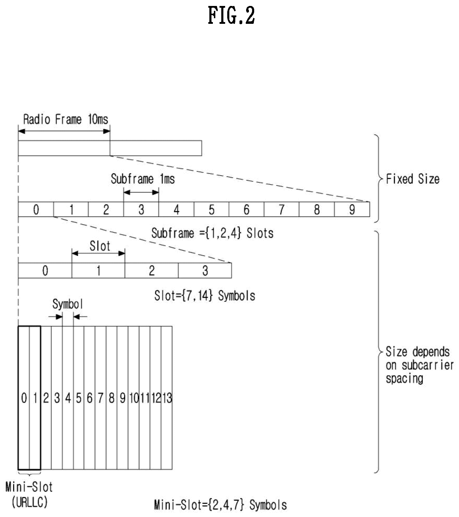

FIG. 2 illustrates a frame structure in a wireless communication system to which the present disclosure may be applied.

A next-generation RAT system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, µ). In addition, although it is assumed that a very low subcarrier spacing is not used in a very high carrier frequency, a used numerology may be selected independently from a frequency band. In addition, a variety of frame structures according to a plurality of numerologies may be supported in a next-generation RAT system.

Hereinafter, an OFDM numerology and frame structure which may be considered in a next-generation RAT system will be described. A plurality of OFDM numerologies supported in a next-generation RAT system may be defined as in the following Table 1.

**[Table 1]**

| µ | Δf=2^{µ}·15 [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

A next-generation RAT system supports a plurality of numerologies (or subcarrier spacings (SCS)) for supporting a variety of 5G/6G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. Although not described in Table 1, 6G systems may additionally support 480kHz/960kHz SCS.

The frequency bands of next-generation RAT systems are defined by various types of frequency ranges (e.g., FR1, FR2, etc.). For example, FR1 and FR2 may be configured as shown in Table 2 below. Additionally, FR2 may refer to millimeter wave (mmW).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in a next-generation RAT system, a size of a variety of fields in a time domain is expresses as a multiple of a time unit of T_{c}=1/(Δfₘₐₓ·N_{f}). Here, Δfₘₐₓ is 480·10³ Hz and N_{f} is 4096. Downlink and uplink transmission is configured (organized) with a radio frame having a duration of T_{f}=1/(ΔfₘₐₓN_{f}/100)·T_{c}=10ms. Here, a radio frame is configured with 10 subframes having a duration of T_{sf}=(ΔfₘₐₓN_{f}/1000)·T_{c}=1ms, respectively. In this case, there may be one set of frames for an uplink and one set of frames for a downlink.

In addition, transmission in an uplink frame No. i from a terminal should start earlier by T_{TA}=(N_{TA}+N_{TA,offset})T_{c} than a corresponding downlink frame in a corresponding terminal starts. For a subcarrier spacing configuration µ, slots are numbered in an increasing order of nₛ^{µ}∈{0,..., Nₛₗₒₜ^{subframe,µ}-1} in a subframe and are numbered in an increasing order of n_{s,f}^{µ}∈{0,..., Nₛₗₒₜ^{frame,µ}-1} in a radio frame. One slot is configured with N_{symb}^{slot} consecutive OFDM symbols and N_{symb}^{slot} is determined according to CP. A start of a slot nₛ^{µ} in a subframe is temporally arranged with a start of an OFDM symbol nₛ^{µ}N_{symb}^{slot} in the same subframe. All terminals may not perform transmission and reception at the same time, which means that all OFDM symbols of a downlink slot or an uplink slot may not be used.

Table 3 represents the number of OFDM symbols per slot (N_{symb}^{slot}), the number of slots per radio frame (Nₛₗₒₜ^{frame,µ}) and the number of slots per subframe (Nₛₗₒₜ^{subframe,µ}) in a normal CP and Table 4 represents the number of OFDM symbols per slot, the number of slots per radio frame and the number of slots per subframe in an extended CP.

**[Table 3]**

| µ | N_{symb}^{slot} | Nₛₗₒₜ^{frame,µ} | Nₛₗₒₜ^{subframe,µ} |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

**[Table 4]**

| µ | N_{symb}^{slot} | Nₛₗₒₜ^{frame,µ} | Nₛₗₒₜ^{subframe,µ} |
|---|---|---|---|
| 2 | 12 | 40 | 4 |

FIG. 2 is an example on µ=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a next-generation RAT system, an antenna port, a resource grid, a resource element, a resource block, a carrier part, etc. may be considered. Hereinafter, the physical resources which may be considered in a next-generation RAT system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

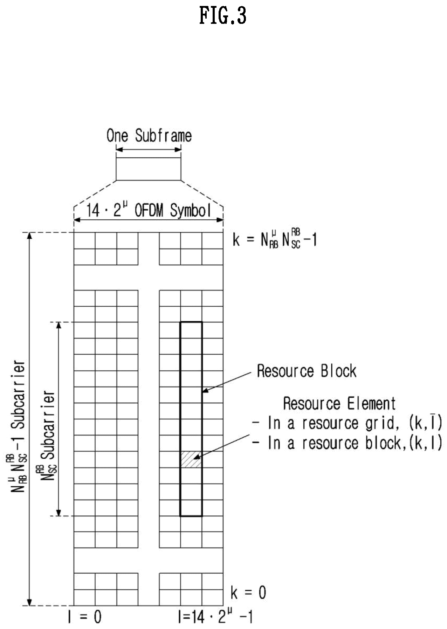

FIG. 3 illustrates a resource grid in a wireless communication system to which the present disclosure may be applied.

In reference to FIG. 3, it is illustratively described that a resource grid is configured with N_{RB}^{µ}N_{sc}^{RB} subcarriers in a frequency domain and one subframe is configured with 14·2^{µ} OFDM symbols, but it is not limited thereto. In a next-generation RAT system, a transmitted signal is described by OFDM symbols of 2^{µ}N_{symb}^{(µ)} and one or more resource grids configured with N_{RB}^{µ}N_{sc}^{RB} subcarriers. Here, N_{RB}^{µ}≤N_{RB}^{max,µ}. The N_{RB}^{max,µ} represents a maximum transmission bandwidth, which may be different between an uplink and a downlink as well as between numerologies. In this case, one resource grid may be configured per µ and antenna port p. Each element of a resource grid for µ and an antenna port p is referred to as a resource element and is uniquely identified by an index pair (k,l'). Here, k=0,...,N_{RB}^{µ}N_{sc}^{RB}-1 is an index in a frequency domain and l'=0,...,2^{µ}N_{symb}^{(µ)}-1 refers to a position of a symbol in a subframe. When referring to a resource element in a slot, an index pair (k,l) is used. Here, l=0,...,N_{symb}^{µ}-1. A resource element (k,l') for µ and an antenna port p corresponds to a complex value, a_{k,l'}^{(p,µ)}. When there is no risk of confusion or when a specific antenna port or numerology is not specified, indexes p and µ may be dropped, whereupon a complex value may be a_{k,l'}^{(p)} or a_{k,l'}. In addition, a resource block (RB) is defined as N_{sc}^{RB}=12 consecutive subcarriers in a frequency domain.

Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radio-frequency channel number).

Common resource blocks are numbered from 0 to the top in a frequency domain for a subcarrier spacing configuration µ. The center of subcarrier 0 of common resource block 0 for a subcarrier spacing configuration µ is identical to 'point A'. A relationship between a common resource block number n_{CRB}^{µ} and a resource element (k,l) for a subcarrier spacing configuration µ in a frequency domain is given as in the following Equation 1. [Equation 1] ${n}_{CRB}^{μ} = \left⌊\frac{k}{{N}_{sc}^{RB}}\right⌋$

In Equation 1, k is defined relatively to point A so that k=0 corresponds to a subcarrier centering in point A. Physical resource blocks are numbered from 0 to N_{BWP,i}^{size,µ}-1 in a bandwidth part (BWP) and i is a number of a BWP. A relationship between a physical resource block n_{PRB} and a common resource block n_{CRB} in BWP i is given by the following Equation 2. [Equation 2] ${n}_{CRB}^{μ} = {n}_{PRB}^{μ} + {N}_{BWP , i}^{start , μ}$

N_{BWP,i}^{start,µ} is a common resource block that a BWP starts relatively to common resource block 0.

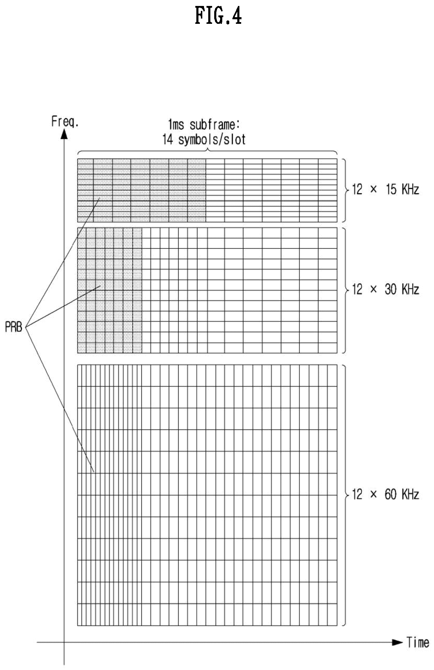

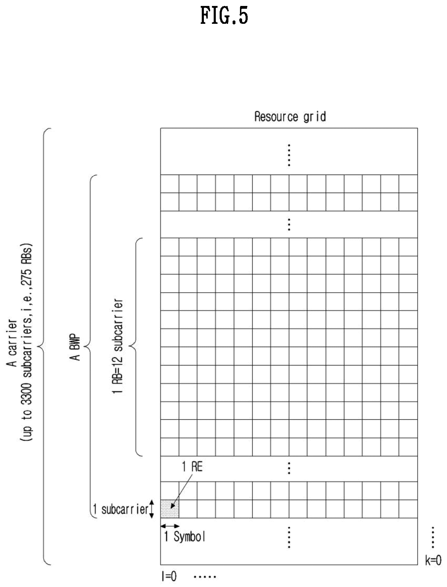

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In a next-generation RAT system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP.

Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC.

A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

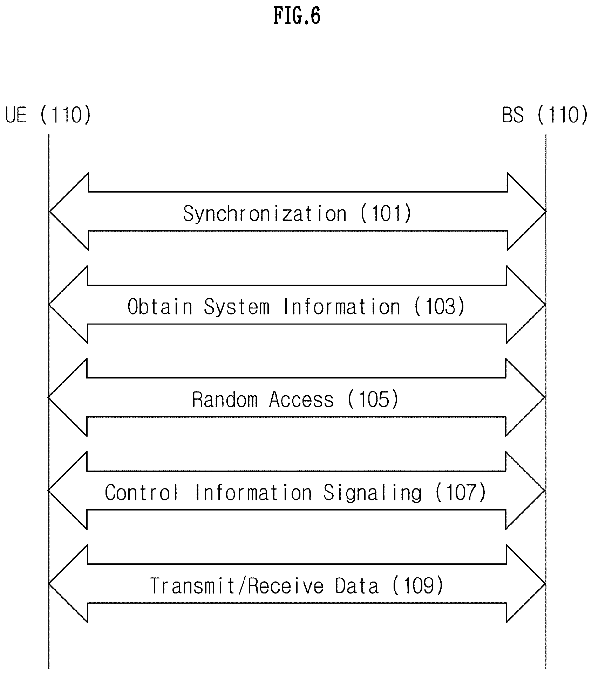

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

The second node of FIG. 6 supports dynamic spectrum sharing (DSS), and may provide connection not only to nodes in which 6G technology is implemented but also to nodes in which pre-6G wireless communication (e.g., 5G, 4G) technology is implemented. That is, the first node of FIG. 6 may have 6G technology implemented or pre-6G wireless communication (e.g., 5G, 4G) technology implemented. In addition, the first node and/or the second node may support not only a non-overlapping full duplex mode but also a full duplex mode.

In FIG. 6, for the sake of simplification of explanation, the first node and the second node are assumed to be a user equipment (UE) and a base station, respectively, and an operation in which a UE (110) and a base station (120) transmit and/or receive data, and operations performed prior thereto, are illustrated. However, the operation of FIG. 6 is not limited to an operation between a UE and a base station, and may be interpreted as an operation between the first node and the second node. In addition, in FIG. 6, a direct transmission/reception operation of wireless signals between the UE (110) and the base station (120) is illustrated, but one or more intermediate points may exist between the UE (110) and the base station (120), and a wireless signal may be transmitted and received via the one or more intermediate points.

Referring to FIG. 6, in step 101, the UE (110) and the base station (120) perform synchronization. For example, the UE (110) performs an initial cell search operation. Specifically, the UE (110) may detect at least one synchronization signal for base station connection, which is transmitted from the base station (120) according to a predefined rule. Here, the synchronization signal may include a plurality of synchronization signals classified according to structure or use (e.g., a first synchronization signal (e.g., a primary synchronization signal), a second synchronization signal (e.g., a secondary synchronization signal), etc.). Through this, the UE (110) may identify a boundary of a unit (e.g., a frame, a subframe, a slot, and/or a symbol) constituting radio signal transmission of the base station (120), and may acquire information (e.g., a cell identifier) on the base station (120).

In step 103, the UE (110) acquires system information transmitted from the base station (120). The system information is information related to attributes, characteristics, and/or capabilities of the base station (120) necessary for accessing the base station (120) and using services, and may be classified according to contents (e.g., whether it is essentially required for access), transmission structure (e.g., channel used, whether it is provided on-demand), etc. For example, the system information may be classified into first system information (e.g., a master information block (MIB), primary system information), second system information (e.g., a system information block (SIB), secondary system information), etc. If necessary, the UE (110) may transmit a signal requesting system information before receiving the system information. However, the requesting and providing of the system information may be performed after a random access procedure described later.

In step 105, the UE (110) and the base station (120) perform a random access procedure. The UE (110) may transmit and/or receive at least one message (e.g., a random access preamble, a random access response (RAR) message, etc.) for the random access procedure, based on information related to a channel for the random access procedure of the base station (120), which is acquired through the system information (e.g., channel location, channel structure, structure of supported preambles, etc.). For example, the UE (110) may transmit a first message (e.g., preamble, MSG1) through a channel for the random access procedure, receive a second message (e.g., RAR message, MSG2), transmit a third message (e.g., MSG3) including information (e.g., identification information) related to the UE (110) to the base station (120) using scheduling information included in the second message, and receive a fourth message (e.g., MSG4) for contention resolution and/or connection establishment. In another example, the first message and the third message may be transmitted and received as one message, or the second message and the fourth message may be transmitted and received as one message.

In step 107, the UE (110) and the base station (120) perform signaling of control information. Here, the control information may be defined in various layers, such as a layer controlling connection (e.g., a radio resource control (RRC) layer), a layer processing mapping between logical channels and transport channels (e.g., a media access control (MAC) layer), and a layer processing physical channels (e.g., a physical (PHY) layer). For example, the UE (110) and the base station (120) may perform at least one of signaling for establishing connection, signaling for determining configuration related to communication, and signaling for indicating allocated resources.

In step 109, the UE (110) and the base station (120) transmit and/or receive data. In other words, the UE (110) and the base station (120) process data and may transmit and/or receive the data based on the signaling of the control information. For example, when transmitting data, the UE (110) or the base station (120) may perform at least one of channel encoding, rate matching, scrambling, constellation mapping, layer mapping, waveform modulation, antenna mapping, and resource mapping for information bits. Conversely, when receiving data, the UE (110) or the base station (120) may perform at least one of signal extraction from resources, waveform demodulation per antenna, signal placement considering layer mapping, constellation demapping, descrambling, and channel decoding.

Table 5 represents an example of a DCI format in a next-generation RAT system.

**[Table 5]**

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted. DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted. DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

### Quasi-co Locaton (QCL)

An antenna port is defined so that a channel where a symbol in an antenna port is transmitted can be inferred from a channel where other symbol in the same antenna port is transmitted. When a property of a channel where a symbol in one antenna port is carried may be inferred from a channel where a symbol in other antenna port is carried, it may be said that 2 antenna ports are in a QC/QCL(quasi co-located or quasi co-location) relationship.

Here, the channel property includes at least one of delay spread, doppler spread, frequency/doppler shift, average received power, received timing/average delay, or a spatial RX parameter. Here, a spatial Rx parameter means a spatial (Rx) channel property parameter such as an angle of arrival.

A UE may be configured at list of up to M TCI-State configurations in a higher layer parameter PDSCH-Config to decode a PDSCH according to a detected PDCCH having intended DCI for a corresponding UE and a given serving cell. The M depends on UE capability.

Each TCI-State includes a parameter for configuring a quasi co-location relationship between ports of one or two DL reference signals and a DM-RS of a PDSCH.

A quasi co-location relationship is configured by a higher layer parameter qcl-Type1 for a first DL RS and qcl-Type2 for a second DL RS (if configured). For two DL RSs, a QCL type is not the same regardless of whether a reference is a same DL RS or a different DL RS.

A quasi co-location type corresponding to each DL RS is given by a higher layer parameter qcl-Type of QCL-Info and may take one of the following values.
- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, when a target antenna port is a specific NZP CSI-RS, it may be indicated/configured that a corresponding NZP CSI-RS antenna port(s) is quasi-colocated with a specific TRS with regard to QCL-Type A and is quasi-colocated with a specific SSB with regard to QCL-Type D. A terminal received such indication/configuration may receive a corresponding NZP CSI-RS by using a doppler, delay value measured in a QCL-TypeA TRS and apply a Rx beam used for receiving QCL-TypeD SSB to reception of a corresponding NZP CSI-RS.

UE may receive an activation command by MAC CE signaling used to map up to 8 TCI states to a codepoint of a DCI field 'Transmission Configuration Indication'.

### CSI framework

In relation to configuration and reporting of channel state information (CSI), a CSI framework of at least one of the following schemes may be applied.

(CSI framework scheme 1) A plurality of CSI-RS resource sets are associated with one channel measurement resource (CMR) (e.g., a resource configurable by a resourcesForChannelMeasurement parameter) or one interference measurement resource (IMR) (e.g., a resource configurable by a csi-IM-ResourcesForInterference parameter or an nzp-CSI-RS-ResourcesForInterference parameter) within a CSI report configuration (e.g., CSI-ReportConfig). For example, CSI-RS resource set #1 and CSI-RS resource set #2 may be associated with the CMR, CSI-RS resources belonging to CSI-RS resource set #1 may be configured with 16 antenna ports (APs), and CSI-RS resources belonging to CSI-RS resource set #2 may be configured with 8 antenna ports (APs).

(CSI framework scheme 2) When one CSI-RS resource set associated with one CMR or one IMR is present within a CSI report configuration, the CSI-RS resource set is composed of one or more CSI-RS resources having different properties such as the number of APs and/or a power offset. For example, with respect to CSI-RS resource set #1 configured as the CMR, CSI-RS resource #1 belonging to CSI-RS resource set #1 may be configured with 16 antenna ports (APs) (or a power offset #1 value may be configured), and CSI-RS resource #2 belonging to the same CSI-RS resource set may be configured with 8 antenna ports (APs) (or a power offset #2 value may be configured).

(CSI framework scheme 3) When one CSI-RS resource set associated with one CMR or one IMR is present within a CSI report configuration, some or all CSI-RS resource(s) within the CSI-RS resource set may be configured with a plurality of numbers of APs and/or power offsets. For example, with respect to CSI-RS resource set #1 configured as the CMR, CSI-RS resource #1 belonging to CSI-RS resource set #1 may be configured with up to 16 antenna ports (APs), and CSI reporting using some AP(s) among them may be configured; alternatively, CSI-RS resource #2 belonging to the same CSI-RS resource set may be configured with a plurality of power offset values, and CSI reporting using all or part of the power offsets may be configured.

Under the CSI framework as described above, a CSI reporting method may be defined by at least one of the following options.

(Option 1) CSI(s) considering a plurality of numbers of APs and/or a plurality of power offset values configured for one CSI report may all be included in one CSI report. Alternatively, CSI(s) considering a plurality of numbers of APs and/or a plurality of power offsets (wherein the numbers of APs and/or power offsets configured/indicated by a base station may be a subset of the numbers of APs and/or power offset values configured for the corresponding CSI report) may be included in one CSI report based on configuration/indication of the base station.

(Option 2) Even when a plurality of numbers of APs and/or a plurality of power offset values are configured for one CSI report, CSI(s) considering a single number of APs and/or a single power offset may be included in one CSI report based on configuration/indication of a base station

(Option 3) Even when a plurality of numbers of APs and/or a plurality of power offset values are configured for one CSI report, CSI(s) considering some of the numbers of APs and/or some of the power offsets may be included in one CSI report based on determination/decision of a UE (by using criteria configured in advance by a base station or pre-defined criteria).

L (>1) sub-configurations may be configured within a CSI report configuration (CSI-ReportConfig), and each sub-configuration may correspond to one spatial or power domain adaptation pattern.

Here, a spatial domain adaptation pattern may correspond to a specific number of antenna ports (or an antenna port on/off pattern), or may correspond to a specific CSI-RS power value (e.g., a CSI-RS power value determined by a powerControlOffsetSS parameter, which is a power offset value between an SSS and a CSI-RS, because a case in which some antenna elements corresponding to one antenna port are turned off may affect the CSI-RS power value).

When the method of CSI framework scheme 2 is applied, when a number of A1 APs (or a power value P1) is configured for CSI-RS index #n1 belonging to a resource set and a number of A2 APs (or a power value P2) is configured for CSI-RS index #n2 belonging to the same resource set, different spatial domain adaptation patterns may be configured for respective sub-configurations by configuring sub-configuration index #s1 to be associated with CSI-RS index #n1 and sub-configuration index #s2 to be associated with CSI-RS index #n2. When the method of CSI framework scheme 3 is applied, when a number of A1 APs (or power values P1/P2) is configured for CSI-RS index #n1 belonging to a resource set, sub-configuration index #s1 is associated with the number of A1 APs (or the power value P1 or a delta1 from the power value P1), and sub-configuration index #s2 is configured to be associated with a number of A2 APs less than A1 constituting CSI-RS index #n1 (or the power value P2 or a delta2 from the power value P1), such that different spatial domain adaptation patterns may be configured for respective sub-configurations.

In addition, a power domain adaptation pattern may refer to variation of a power offset value (e.g., a power offset value determined by a powerControlOffset parameter, which is a power offset value between a PDSCH and a CSI-RS, a powerControlOffsetSS parameter, which is a power offset value between an SSS and a CSI-RS, or the like).

When the method of CSI framework scheme 2 is applied, when a power value P1 is configured for CSI-RS index #n1 belonging to a resource set and a power value P2 is configured for CSI-RS index #n2 belonging to the same resource set, different power domain adaptation patterns may be configured for respective sub-configurations by configuring sub-configuration index #s1 to be associated with CSI-RS index #n1 and sub-configuration index #s2 to be associated with CSI-RS index #n2.

When the method of CSI framework scheme 3 is applied, when a power value P1 (and a power value P2) is configured for CSI-RS index #n1 belonging to a resource set, sub-configuration index #s1 is configured to be associated with the power value P1, and sub-configuration index #s2 is configured to be associated with the power value P2 (or a delta from the power value P1), such that different power domain adaptation patterns may be configured for respective sub-configurations. A CSI report composed of CSI(s) corresponding to N sub-configurations (where N is a value of 1 or more and L or less) among the L sub-configurations may be fed back to a base station (by using one of the above-described Option 1, Option 2, and Option 3).

As described above, one or more sub-configurations may be configured within one CSI report configuration, and within each sub-configuration, one or a combination of the following configurations may be configured.
- an ID list of one or more CSI-RS resource(s)
- an antenna port subset indication configured as a bitmap
- an additional power offset delta from an EPRE offset between a PDSCH and a CSI-RS configured within a CSI-RS resource configuration

For convenience of description, a CSI report configuration including a sub-configuration in which an ID list of one or more CSI-RS resource(s) is configured is referred to as type 2 spatial domain (SD) adaptation. A CSI report configuration including a sub-configuration in which an antenna port subset indication configured as a bitmap is configured is referred to as type 1 SD adaptation. A CSI report configuration including a sub-configuration in which an additional power offset delta value is configured is referred to as power domain (PD) adaptation. For sub-configuration(s) belonging to one CSI report configuration, an ID list of one or more CSI-RS resource(s) and/or a power offset delta value may be configured, in which case it is referred to as type 2 SD+PD adaptation. For sub-configuration(s) belonging to one CSI report configuration, an antenna port subset indication configured as a bitmap and/or a power offset delta value may be configured, in which case it is referred to as type 1 SD+PD adaptation.

In the case of type 1 SD or PD or type 1 SD+PD adaptation, each CSI-RS resource may be associated with each of all sub-configurations configured within one CSI report configuration, and in the case of type 2 SD, each CSI-RS resource may be associated only with a single sub-configuration among a plurality of sub-configurations within one CSI report configuration. In the case of type 2 SD+PD adaptation, a list #1 of CSI-RS resource(s) configured in one sub-configuration within the same CSI report configuration and a list #2 of CSI-RS resource(s) configured in another sub-configuration may be identical to each other or may be disjoint.

Meanwhile, when L sub-configurations are configured within one CSI report configuration, a UE may report CSI information corresponding to each of the L sub-configurations to a base station through one PUSCH/PUCCH. Among the L sub-configurations, only N (where N is a value of 1 or more and L or less) sub-configuration(s) may be activated or triggered through a MAC-CE or DCI, and in this case, the UE may report CSI information corresponding to each of the N sub-configurations to the base station through one PUSCH/PUCCH. Specifically, with respect to a CSI report configuration in which semi-persistent CSI reporting on a PUCCH is configured, N sub-configuration(s) among L sub-configurations configured through a MAC-CE may be activated, and with respect to a CSI report configuration in which semi-persistent CSI reporting or aperiodic CSI reporting on a PUSCH is configured, N sub-configuration(s) among L sub-configurations configured through DCI may be triggered.

### Network energy saving (NES)

Energy saving of a base station is being importantly considered in a wireless communication system because it may contribute to constructing an eco-friendly network through reduction of carbon emissions and to reducing operational expenditure (OPEX) of communication operators. In particular, since a high data rate is required due to the introduction of next-generation wireless communication, base stations shall equipped with a larger number of antennas and provide services through a wider bandwidth and frequency band.

Accordingly, since an energy cost of the base station excessively increases, the base station needs to apply an energy saving scheme.

For an NES purpose, the base station may operate techniques such as controlling on/off over a certain duration on a time axis, controlling transmission/reception resources for UE-common or UE-specific signals/channels, changing an amount of frequency-axis resources, controlling transmission power, and turning on/off antenna ports and/or transmission reception points (TRPs) in a spatial domain. A state in which such technique(s) (defined/referred to as NES_tech for convenience of description) is applied may be defined/referred to as an NES mode or an NES state.

The base station may inform a UE of which NES_tech(s) is applied for each NES_tech (or a corresponding group) (scheme 1), or may configure, in advance, NES_tech(s) (or corresponding group(s)) corresponding to each code-point of a specific indicator (e.g., the indicator may be an indicator indicated by DCI or MAC CE or configured by higher layer signaling) (scheme 2).

For example, in the case of scheme 1, when at least one NES_tech is applied, a UE may define a corresponding state as an NES mode or an NES state, or may refer to different NES modes or different NES states depending on which NES_tech is applied. In contrast, in the case of scheme 2, for example, when a 1-bit indicator is present, if no NES_tech corresponds to '0' and one or more NES_tech(s) is associated with '1', the UE may define a corresponding state as an NES mode or an NES state when '1' is indicated by the indicator. As another example, when a 2-bit indicator is present, if no NES_tech corresponds to '00', one or more NES_tech_A(s) is associated with '01', one or more NES_tech_B(s) is associated with '10', and one or more NES_tech_C(s) is associated with '11', the UE may define a corresponding state as an NES mode or an NES state when a code-point other than '00' is indicated by the indicator. Meanwhile, when '01' is indicated to the UE, it may be defined as NES state #1; when '10' is indicated, it may be defined as NES state #2; and when '11' is indicated, it may be defined as NES state #3. Based thereon, whether a state is an NES state or not, or which NES state it is, may be distinguished for each code-point.

A base station may turn on/off certain spatial elements or control a power value for a downlink signal/channel for an NES purpose. In the present disclosure, a spatial element may refer to an antenna port, an active transceiver chain, a panel, or a TRP. In order for the base station to dynamically apply various NES techniques in such a spatial domain and a power domain, CSI-RS resource(s) (set(s)) having different antenna ports may be associated with one CSI report setting (e.g., CSI-ReportConfig), or a plurality of power offsets (e.g., a powerControlOffset parameter, which is a power offset value between a PDSCH and a CSI-RS, a powerControlOffsetSS parameter, which is a power offset value between an SSS and a CSI-RS, etc.) may be associated.

### Operation and measurement method for on-demand synchronization signal block (SSB)

From the perspective of a base station operating a plurality of frequency bands, even when the number of UEs to be served is small or a traffic load is relatively low, an amount of energy consumed by periodically transmitting an SSB and/or system information may be large.

In the description of the present disclosure, a frequency band may be replaced with and applied as a band, a carrier, a serving cell, or a BWP, or the like.

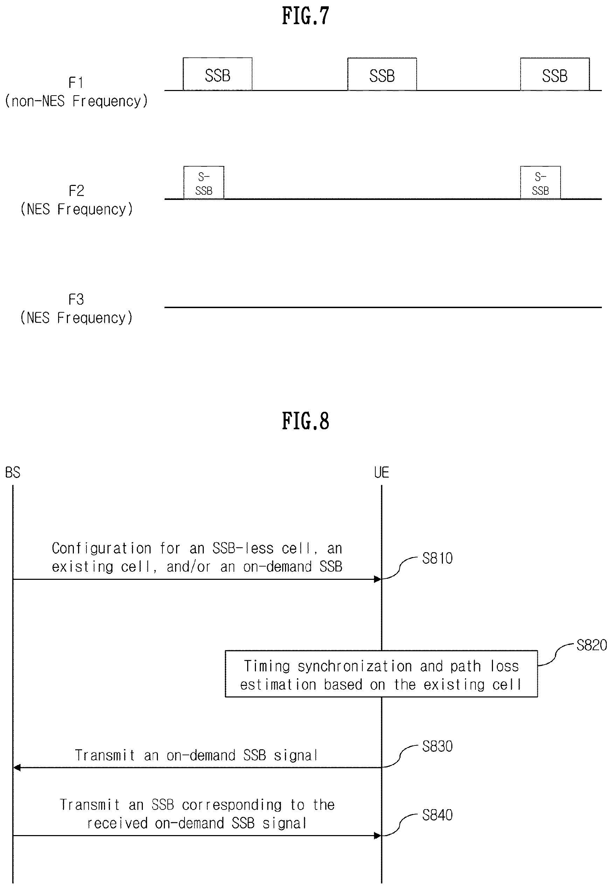

FIG. 7 illustrates an SSB transmission method of a base station operating multiple frequency bands applicable to the present disclosure.

Referring to FIG. 7, a base station operating three frequency bands may periodically transmit a (legacy) SSB only in some frequency bands (e.g., F1 in FIG. 7). Meanwhile, the base station may transmit a simplified (or modified) SSB (S-SSB) in the remaining frequency band (e.g., F2 in FIG. 7), or may not transmit an SSB in another frequency band (e.g., F3 in FIG. 7). Accordingly, the base station may achieve energy saving.

In this regard, in the case of a UE operating in F2 or F3, the UE may request SSB transmission of the base station in a corresponding frequency band. An SSB transmitted based thereon may be referred to as an on-demand SSB. The on-demand SSB may be a (legacy) SSB, or may be an S-SSB.

A frequency band in which a base station periodically transmits an SSB may correspond to a non-NES frequency band, and another frequency band may correspond to an NES frequency band. For convenience of description, a cell in which an SSB may not be transmitted, such as F2 or F3 (e.g., the above-described NES frequency band), may be referred to as an SSB-less cell. As an example, from the perspective of a UE, the SSB-less cell may be a PCell, a PSCell, or an SCell.

The present disclosure specifically proposes methods for operation of an on-demand SSB in an SSB-less cell, (configuration) information related thereto, and methods for performing measurement on the on-demand SSB.

In relation to the methods proposed in the present disclosure, an operation of a UE in an (RRC) connected mode/state (hereinafter, a CONNECTED UE) and an operation of a UE in an idle or inactive mode/state (hereinafter, an IDLE/INACTIVE UE) may be considered.

For example, in relation to the method related to an on-demand SSB in an SSB-less cell described in the present disclosure, a CONNECTED UE may be based on a carrier aggregation (CA) operation (e.g., a CA operation supported in a 5G/6G-based wireless communication system). In this case, the SSB-less cell may correspond to a PCell, a PSCell, or an SCell for the CA operation. In addition, an IDLE/INACTIVE UE may be based on an NES operation (e.g., an NES operation supported in a 5G/6G-based wireless communication system). In this case, the SSB-less cell may correspond to a cell to which the NES operation is applied (e.g., an NES cell). Alternatively, the on-demand SSB may be operated in a cell to which the NES operation is not applied (for example, a non-NES cell).

In relation to the proposed method in the present disclosure, an IDLE/INACTIVE UE may (re)select a cell to determine a first cell as a serving cell and may acquire system information from the first cell. In addition, a CONNECTED UE may acquire system information from the first cell, or may acquire system information by receiving DCI, MAC-CE, or a UE-specific message transmitted by a base station.

In this case, the UE may identify, through system information (e.g., an MIB, an SIB1, or another SIB) or DCI/MAC-CE/a UE-specific message of the first cell, which is acquired, that a second cell/TRP supports and/or operates an SSB-less cell/TRP operation and/or an on-demand SSB operation. For this purpose, information (e.g., an indicator) indicating that the second cell/TRP supports the SSB-less cell/TRP operation and/or the on-demand SSB operation may be included in the system information of the first cell or in the DCI/MAC-CE/UE-specific message. Additionally or alternatively, a UL resource (e.g., a PRACH resource/preamble, etc.) configuration for requesting an on-demand SSB for the second cell/TRP may be included. Additionally or alternatively, a reference signal (RS) configuration mapped to the second cell/TRP or a reference signal (RS) configuration mapped to a specific on-demand SSB of the second cell/TRP or having a quasi-co-location (QCL) relationship therewith may be included.

In relation to the proposed method in the present disclosure, a reference signal (RS) may be a reference signal for a first cell/TRP or a second cell/TRP, or may be a reference signal mapped to a specific SSB (or a specific SSB index) of the first cell/TRP or the second cell/TRP. A plurality of reference signals (RSs) may be configured as one reference signal (RS) set, and each reference signal (RS) within the set may be indicated through a different reference signal (RS) index. Different reference signal (RS) indices may be mapped to different SSB indices of the first cell/TRP or the second cell/TRP or may be associated in a quasi-co-location (QCL) relationship therewith.

When a reference signal (RS) for the second cell/TRP is configured, a UE supporting NES may perform layer 1 (L1) or layer 3 (L3)-based measurement on the reference signal (RS). In this case, the reference signal (RS) may be an SSB, a CSI-RS, or a separate new reference signal (RS) of the first cell/TRP or the second cell/TRP.

In this regard, the UE may trigger the above-described measurement when one or more of the following conditions are satisfied.
- Condition 1. In a case that the UE supports an SSB-less cell/TRP operation and/or an on-demand SSB operation for NES
- Condition 2. In a case that a message indicating a transition from a CONNECTED mode to an IDLE/INACTIVE mode (e.g., an RRC release message) configures/indicates the above-described measurement
- Condition 3. In a case that system information acquired from a serving cell by the UE configures/indicates the above-described measurement
- Condition 4. In a case that an SSB (or CSI-RS) measurement value for the first cell/TRP is less than or equal to a threshold value
- Condition 5. In a case that a priority of a frequency for the second cell/TRP is higher than a priority of a frequency for the first cell/TRP
- Condition 6. In a case that a RACH procedure in the first cell/TRP fails
- Condition 7. In a case that a radio link failure or a beam failure occurs in the first cell/TRP
- Condition 8. In a case that the UE receives a command indicating performance of the above-described measurement from the first cell/TRP (e.g., the command may be received through an RRC message, a MAC-CE, or DCI)

The UE performs an UL transmission (e.g., a PRACH transmission) for requesting an on-demand SSB for a second cell/TRP in a first cell/TRP or the second cell/TRP according to a UL resource configuration, and thereafter the UE may receive the requested on-demand SSB from the second cell/TRP. In this case, a specific UL resource (e.g., a specific PRACH resource/preamble) may be mapped to one or a plurality of specific on-demand SSB indices, and different UL resource(s) may be mapped to different on-demand SSB indices. In addition, a specific UL resource may be mapped to one or a plurality or all of an MIB, an SIB1, an SIBx (where x is an integer greater than 1), and an on-demand SSB, and based thereon, the UE may be configured to request one or a plurality or all thereof.

Alternatively, the UE may trigger a RACH to request an on-demand SSB, and may request one or a plurality or all of an MIB, an SIB1, an SIBx (where x is an integer greater than 1), and an on-demand SSB through a RACH MSG3 or a RACH MSGA. For example, the RACH MSG3 or the RACH MSGA may transmit a UCI/MAC-CE/RRC message, and the UCI/MAC-CE/RRC message may include information (e.g., an indicator) requesting one or a plurality or all of the MIB, the SIB1, the SIBx (where x is an integer greater than 1), and the on-demand SSB. For example, the UCI/MAC-CE/RRC message may include information (e.g., an indicator) requesting the on-demand SSB, or may include SSB index(es) corresponding to SSB(s) to be requested. In addition, the UCI/MAC-CE/RRC message may include information (e.g., an indicator) indicating the MIB, information (e.g., an indicator) indicating the SIB1, and information (e.g., an indicator) indicating the SIBx (where x is an integer greater than 1). The UCI/MAC-CE/RRC message may include bitmap information composed of respective bits for the corresponding pieces of information, and a plurality of bit strings may be configured by concatenating the respective pieces of information.

The above-described IDLE/INACTIVE UE may perform a UL transmission for requesting an on-demand SSB when one or more of the following conditions are satisfied.
- Condition A. A condition in which a value obtained by measuring a reference signal (RS) mapped to a second cell/TRP is higher than, or higher than by an offset or more than, a value obtained by measuring a reference signal (RS) for a first cell/TRP (e.g., a cell-defining SSB)
- Condition B. A condition in which a value obtained by measuring a reference signal (RS) mapped to a second cell/TRP is equal to or greater than a threshold value
- Condition C. A condition in which a value obtained by measuring a reference signal (RS) for a first cell/TRP (e.g., a cell-defining SSB) is equal to or less than a threshold value
- Condition D. A condition in which a frequency of a reference signal (RS) mapped to a second cell/TRP or a frequency for the second cell/TRP has a higher priority than a frequency for the first cell/TRP
- Condition E. A condition in which the second cell/TRP and the first cell/TRP belong to the same PLMN or an equivalent PLMN
- Condition F. A condition in which the second cell is determined as a suitable cell for the UE based on system information for the second cell/TRP acquired from the first cell/TRP

In this regard, an IDLE/INACTIVE UE may receive an on-demand SSB and an MIB, an SIB1, and an SIBx for a second cell, and may perform cell reselection from a first cell to the second cell.

Additionally or alternatively, the IDLE/INACTIVE UE may receive an SIB1 to acquire a RACH configuration for the first cell or the second cell, and may perform a RACH procedure for the first cell or the second cell to transition to a CONNECTED mode. In this case, a PCell or a PSCell of the UE may be the first cell or the second cell. Thereafter, before or after the transition to the CONNECTED mode, the UE may further configure the second cell (or the first cell) as an SCell in addition to the first cell (or the second cell) serving as the PCell or the PSCell.

Additionally or alternatively, an IDLE/INACTIVE/CONNECTED UE may request all of an on-demand SSB, an MIB, an SIB1, and an SIBx through the above-described UL transmission and may receive all thereof simultaneously, or may request and receive one or some thereof. Alternatively, the UE may first request the on-demand SSB and then perform a separate UL transmission requesting the MIB, the SIB1, and the SIBx. Alternatively, the UE may first request the on-demand SSB and the MIB and then perform a separate UL transmission requesting the SIB1 and the SIBx.

Accordingly, the UE may receive all together through a single request, or may request and receive an on-demand SSB, an MIB, an SIB1, and an SIBx sequentially, or may request and receive only some thereof. As an example, when the second cell is configured as an SCell, the UE may request and receive only the on-demand SSB, and, if necessary, may request the on-demand SSB and the MIB simultaneously through one UL transmission and receive the on-demand SSB and the MIB. As another example, when the second cell is configured as a PSCell, the UE may simultaneously request the on-demand SSB and the MIB and receive the on-demand SSB and the MIB. As still another example, when the second cell is configured as a PCell, the UE may simultaneously or sequentially request the on-demand SSB and the MIB/SIB1 to receive the on-demand SSB and the MIB/SIB1, and then may request and receive the SIBx according to an on-demand SI (system information) configuration of the SIB1.

In the proposed method of the present disclosure, the first cell/TRP and the second cell/TRP may be the same or different. In addition, the first TRP and the second TRP may belong to the same cell or to different cells.

The embodiments described below are merely distinguished for clarity of description, and some or all configurations of one embodiment may be combined/combined with some or all configurations of another embodiment to be applied, or may be applied independently.

### Embodiment 1

The present embodiment relates to a method of determining that a cell/TRP is an SSB-less cell/TRP and/or that an on-demand SSB is being operated, based on a measurement result of a specific reference signal (RS).

A UE may measure reference signals (RSs) for a first cell/TRP or a second cell/TRP, and may determine that the second cell/TRP corresponds to an SSB-less cell/TRP and/or is operating an on-demand SSB according to whether a measurement value (e.g., RSRP, RSRQ, RSSI, or the like) is equal to or greater than, or equal to or less than, a configured threshold value. If the on-demand SSB is being operated, the UE may request the on-demand SSB, and if the on-demand SSB is not being operated, the UE may not request the on-demand SSB.

In this case, an overall measurement value for the reference signal (RS) may be determined as an average value of measurement values for respective reference signal (RS) indexes in a reference signal (RS) set constituting the reference signals (RSs), or may be determined as a best value (or a worst value) of the measurement values for the respective reference signal (RS) indexes in the reference signal (RS) set. In addition, the above-described threshold value may be configured through system information of the first cell and/or a UE-specific message. In the case of an IDLE/INACTIVE UE, the UE-specific message may be an RRC release message.

Specifically, a UE may perform the following operations.

When the above-described overall measurement value is equal to or greater than, or equal to or less than, a threshold value, the UE may determine that an on-demand SSB for the second cell/TRP is being operated or is not being operated for all SSB indexes.

For example, when the measurement value is equal to or greater than the threshold value, the UE may determine that the on-demand SSB for the second cell/TRP is being operated. Accordingly, when transmission of the on-demand SSB is not detected, the UE may request the on-demand SSB, and when it is detected, the UE may not request the on-demand SSB. Alternatively, when the measurement value is equal to or greater than the threshold value, the UE may determine that an SSB for the second cell/TRP is being transmitted and that it is not necessary to request the on-demand SSB.

As another example, when the measurement value is equal to or less than the threshold value, the UE may determine that the on-demand SSB for the second cell/TRP is not being operated. Accordingly, the UE may not request the on-demand SSB. Alternatively, when the measurement value is equal to or less than the threshold value, the UE may determine that an SSB for the second cell/TRP is not being transmitted and that the on-demand SSB may be requested.

Additionally or alternatively, when an individual measurement value of a specific reference signal (RS) index is equal to or greater than, or equal to or less than, a threshold value, a UE may determine that, for an SSB index mapped to the specific reference signal (RS) index with respect to the second cell/TRP, an on-demand SSB is being operated or is not being operated.

For example, when an individual measurement value of a specific reference signal (RS) index is equal to or greater than the threshold value, the UE may determine that, for an SSB index mapped to the specific reference signal (RS) index with respect to the second cell/TRP, an on-demand SSB is being operated. Accordingly, when transmission of the on-demand SSB is not detected, the UE may request the on-demand SSB for the corresponding SSB index, and when the transmission of the on-demand SSB is detected, the UE may not request the on-demand SSB for the corresponding SSB index. Alternatively, when the individual measurement value of the specific reference signal (RS) index is equal to or greater than the threshold value, the UE may determine that an SSB is being transmitted for the SSB index mapped to the specific reference signal (RS) with respect to the second cell/TRP, and that it is not necessary to request the on-demand SSB for the corresponding SSB index.

As another example, when an individual measurement value of a specific reference signal (RS) index is equal to or less than a threshold value, a UE may determine that, for an SSB index mapped to the specific reference signal (RS) index with respect to the second cell/TRP, an on-demand SSB is not being operated. Accordingly, the UE may not request the on-demand SSB for the corresponding SSB index. Alternatively, when the individual measurement value of the specific reference signal (RS) index is equal to or less than the threshold value, the UE may determine that an SSB is not being transmitted for the SSB index mapped to the specific reference signal (RS) index with respect to the second cell/TRP, and that the on-demand SSB may be requested for the corresponding SSB index.

Additionally or alternatively, when the above-described overall measurement value is equal to or greater than, or equal to or less than, a threshold value, the UE may determine that an SSB for the second cell/TRP is being transmitted or is not being transmitted for all SSB indexes. For example, when the measurement value is equal to or greater than the threshold value, the UE may determine that an SSB for the second cell/TRP is being transmitted and that it is not necessary to request the on-demand SSB. As another example, when the measurement value is equal to or less than the threshold value, the UE may determine that an SSB for the second cell/TRP is not being transmitted and that the on-demand SSB may be requested (e.g., when the on-demand SSB is configured).

Additionally or alternatively, when an individual measurement value of a specific reference signal (RS) index is equal to or greater than, or equal to or less than, a threshold value, a UE may determine that an SSB index mapped to the specific reference signal (RS) index with respect to the second cell/TRP is being transmitted or is not being transmitted. For example, when the individual measurement value of the specific reference signal (RS) index is equal to or greater than the threshold value, the UE may determine that the SSB index mapped to the specific reference signal (RS) index with respect to the second cell/TRP is being transmitted. Accordingly, the UE may determine that it is not necessary to request an on-demand SSB for the corresponding SSB index. As another example, when the individual measurement value of the specific reference signal (RS) index is equal to or less than the threshold value, the UE may determine that the SSB index mapped to the specific reference signal (RS) index with respect to the second cell/TRP is not being transmitted. Accordingly, the UE may determine that the on-demand SSB may be requested for the corresponding SSB index (for example, when the on-demand SSB is configured).

A base station that has received an on-demand SSB request from a UE may operate to transmit SSB(s) for the corresponding SSB index or for all SSB indexes with respect to the second cell/TRP so that the UE may receive the same. In this case, the on-demand SSB transmission may be performed at a resource location at which an existing (e.g., legacy) SSB is transmitted, or may be configured to be performed at a separate resource (e.g., a predetermined occasion)

### Embodiment 2

The present embodiment relates to a method of determining radio resource management (RRM) based on a measurement result of a specific reference signal (RS).

In configuring RRM measurement for a second cell/TRP, a base station may configure an SSB or a reference signal (RS) for a first cell/TRP as a measurement object. In this case, an RRM measurement configuration for the first cell/TRP may also configure the same SSB or reference signal (RS) as the measurement object. That is, a first cell/TRP measurement and a second cell/TRP measurement may be configured with the same measurement object. In other words, the same measurement object may be configured for measurement with respect to the first cell/TRP and measurement with respect to the second cell/TRP

In this case, a measurement report message transmitted by a base station to a UE may include a first cell/TRP measurement report configuration (e.g., a reporting period, a measurement event, a time to trigger, or the like), and may indicate (to the UE) that a second cell/TRP measurement report is to refer to the first cell/TRP measurement report configuration. The UE having received such a message may apply the first cell/TRP measurement report configuration to the second cell/TRP measurement report. That is, the UE may perform a measurement report for the second cell/TRP based on the first cell/TRP measurement report configuration.

In this regard, when a UE performs a first cell/TRP measurement report and a second cell/TRP measurement report periodically according to a configuration of a base station, or when the UE performs the first cell/TRP measurement report and the second cell/TRP measurement report according to a specific event (e.g., A1, A2, A3, or the like), the first cell/TRP measurement report and the second cell/TRP measurement report may be triggered simultaneously, and the UE may report the first cell/TRP measurement report and the second cell/TRP measurement report in a single message at the same reporting timing. In this case, a message for transmitting/delivering the first cell/TRP measurement report and the second cell/TRP measurement report based on a measurement result configured with the same measurement object may include only information on one of the first cell/TRP measurement report and the second cell/TRP measurement report. For example, the UE may include, in the message, only the first cell/TRP measurement report for a PCell/PSCell and may not include the second cell/TRP measurement report for an SCell. In this regard, the UE may also configure and transmit the message such that the second cell/TRP measurement report for the SCell indicates the first cell/TRP measurement report.

In the case of the corresponding method, it may be efficient in terms of reporting one of measurement results based on different reference signals (RSs) configured with the same measurement object. In addition, based on that a plurality of reference signals are configured with the same measurement object, it is not necessary to separately provide a configuration related to a measurement report for an on-demand SSB, which may be efficient in terms of signaling and/or operation.

### Embodiment 3

The present embodiment relates to a RACH method for a cell/TRP associated with an on-demand SSB.

In relation to the method proposed in the present disclosure, the UE may perform a RACH for a cell/TRP associated with an on-demand SSB, for example, a second cell/TRP.

For example, the UE may perform the RACH due to a PDCCH order, UL time alignment, a scheduling request (SR), or mobility. Alternatively, the UE may perform the RACH to request an on-demand SSB or system information for the second cell/TRP.

Additionally, when a beam failure instance indicator for the second cell/TRP is equal to or greater than a maximum value, the UE may report a BSR MAC CE or a PUCCH SR (e.g., when the second cell/TRP is an SCell), or may trigger a RACH (e.g., when the second cell/TRP is a PCell/PSCell). In this case, a BSR MAC CE, a PUCCH SR, or a RACH transmission for the second cell/TRP may be performed in a first cell/TRP, the second cell/TRP, or a third cell/TRP. In addition, for BSR MAC CE transmission, the UE may perform PRACH resource transmission of the first cell/TRP, the second cell/TRP, or the third cell/TRP, and may transmit the BSR MAC CE through a corresponding RACH MSG3 or MSGA message.

In this regard, the first cell may be a PCell/PSCell, and the second cell and the third cell may be SCells. Alternatively, the second cell may be a PCell/PSCell, and the first cell and the third cell may be SCells. In addition, the first TRP, the second TRP, and the third TRP may be the same PCell/PSCell or SCell, or two or three of the first TRP, the second TRP, and the third TRP may belong to the same or different PCell/PSCell or SCell. In addition, for the above-described RACH operation, the first cell/TRP or the third cell/TRP may be configured as a reference cell/TRP for the second cell/TRP.

When a RACH is performed with a PRACH resource of the second cell/TRP based on the reason for the second cell/TRP as described above, the UE may perform the following operation.

When an SSB (or a CSI-RS) for a cell/TRP (e.g., the second cell/TRP) to which the PRACH resource belongs is being transmitted, the UE measures the SSB (or the CSI-RS), and may perform transmission by selecting the PRACH resource based thereon.

Additionally or alternatively, when an SSB (or a CSI-RS) for a cell/TRP (e.g., a second cell/TRP) to which a PRACH resource belongs is available but is not transmitted during a DTX inactive period, during the DTX inactive period, the UE measures an SSB (or a CSI-RS) of a first cell/TRP or a third cell/TRP or a reference signal (RS) of the present disclosure, and may perform transmission by selecting the PRACH resource based thereon.

Additionally or alternatively, based on that the cell/TRP (e.g., the second cell/TRP) to which the PRACH resource belongs is an on-demand SSB or an SSB-less cell/TRP, when an SSB (or a CSI-RS) for the cell/TRP is not available and is not being transmitted, the UE measures an SSB (or a CSI-RS) of a first cell/TRP or a third cell/TRP or a reference signal (RS) of the present disclosure, and may perform transmission by selecting the PRACH resource based thereon.

Additionally or alternatively, based on that the cell/TRP (e.g., the second cell/TRP) to which the PRACH resource belongs is an on-demand SSB or an SSB-less cell/TRP, when an SSB (or a CSI-RS) for the cell/TRP is not available and is not being transmitted, when DCI triggering the RACH triggers a request for an on-demand SSB, the UE may request an on-demand SSB (or a CSI-RS) for the second cell/TRP, and then may measure the requested on-demand SSB (or the CSI-RS), and may perform transmission by selecting the PRACH resource based thereon.

Additionally or alternatively, based on that the cell/TRP (e.g., the second cell/TRP) to which the PRACH resource belongs is an on-demand SSB or an SSB-less cell/TRP, when an SSB (or a CSI-RS) for the cell/TRP is not available and is not being transmitted, (when DCI triggering the RACH triggers an on-demand SSB without a separate request for the on-demand SSB,) the UE may measure an on-demand SSB (or a CSI-RS) for the second cell/TRP, and may perform transmission by selecting the PRACH resource based thereon.

For the above-described operations, the UE may configure a mapping relationship per beam index between an SSB (or a CSI-RS) for a second cell/TRP and an SSB (or a CSI-RS) for a first cell/TRP or a third cell/TRP. As an example, a base station may configure mapping of an SSB index #k of the first cell/TRP or the third cell/TRP and an SSB index #m of the second cell/TRP in a QCL relationship, and may transmit the corresponding configuration to the UE through system information or a UE-specific message. Based thereon, when a measurement value for the SSB index #k of the first cell/TRP or the third cell/TRP is equal to or greater than a threshold value, the UE may perform transmission by selecting a PRACH resource/preamble for the SSB index #m of the second cell/TRP.

Additionally or alternatively, when there is no separate mapping configuration, the UE may select a PRACH resource by assuming that directions per beam index for an SSB (or a CSI-RS) for a second cell/TRP and an SSB (or a CSI-RS) for a first cell/TRP or a third cell/TRP are the same. As an example, an SSB index #k of the second cell/TRP and an SSB index #k of the first cell/TRP or the third cell/TRP may be assumed to be in a QCL relationship with each other. Based thereon, when a measurement value for the SSB index #k of the first cell/TRP or the third cell/TRP is equal to or greater than a threshold value, the UE may perform transmission by selecting a PRACH resource/preamble for the SSB index #k of the second cell/TRP.

Meanwhile, when a RACH is performed with a PRACH resource of a first cell/TRP or a third cell/TRP based on the reason for the second cell/TRP as described above, the UE may perform the following operation.

A case in which an SSB (or a CSI-RS) for the second cell/TRP exists, a case in which an SSB (or a CSI-RS) for the second cell/TRP does not exist and an SSB (or a CSI-RS) for a cell/TRP (for example, the first cell/TRP or the third cell/TRP) to which the PRACH resource belongs exists, or a case in which an SSB (or a CSI-RS) for the second cell/TRP exists but an SSB (or a CSI-RS) for the cell/TRP (e.g., the first cell/TRP or the third cell/TRP) to which the PRACH resource belongs exists may be considered.

In this regard, when an SSB (or a CSI-RS) for a second cell/TRP is being transmitted, the UE measures the SSB (or the CSI-RS), and may perform transmission by selecting a PRACH resource of a first cell/TRP or a third cell/TRP based thereon.

Additionally or alternatively, when an SSB (or a CSI-RS) for a second cell/TRP is available but is not transmitted during a DTX inactive period, during the DTX inactive period (or always regardless of DTX active/inactive), the UE measures an SSB (or a CSI-RS) of a first cell/TRP or a third cell/TRP or a reference signal (RS) of the present disclosure, and may perform transmission by selecting a PRACH resource based thereon.

Additionally or alternatively, when an SSB (or a CSI-RS) for a second cell/TRP is not available and is not being transmitted (based on that the second cell/TRP is an on-demand SSB or an SSB-less cell/TRP), the UE measures an SSB (or a CSI-RS) of a first cell/TRP or a third cell/TRP or a reference signal (RS) of the present disclosure, and may perform transmission by selecting a PRACH resource based thereon. When a RACH is triggered through DCI, if the DCI does not indicate an on-demand SSB trigger, the UE measures an SSB (or a CSI-RS) of the first cell/TRP or the third cell/TRP or a reference signal (RS) of the present disclosure, and may perform transmission by selecting a PRACH resource based thereon.

For the above-described operations, the UE may configure a mapping relationship per beam index between an SSB (or a CSI-RS) for a second cell/TRP and an SSB (or a CSI-RS) for a first cell/TRP or a third cell/TRP. As an example, a base station may configure mapping of an SSB index #k of the first cell/TRP or the third cell/TRP and an SSB index #m of the second cell/TRP in a QCL relationship, and may transmit the corresponding configuration to the UE through system information or a UE-specific message. Based thereon, when a measurement value for the SSB index #k of the second cell/TRP is equal to or greater than a threshold value, the UE may perform transmission by selecting a PRACH resource/preamble for the SSB index #m of the first cell/TRP or the third cell/TRP.

Additionally or alternatively, when there is no separate mapping configuration, the UE may select a PRACH resource by assuming that directions per beam index for an SSB (or a CSI-RS) for a second cell/TRP and an SSB (or a CSI-RS) for a first cell/TRP or a third cell/TRP are the same. As an example, an SSB index #k of the second cell/TRP and an SSB index #k of the first cell/TRP or the third cell/TRP may be assumed to be in a QCL relationship with each other. Based thereon, when a measurement value for the SSB index #k of the second cell/TRP is equal to or greater than a threshold value, the UE may perform transmission by selecting a PRACH resource/preamble for the SSB index #k of the first cell/TRP or the third cell/TRP.

Hereinafter, a method for operating an SSB-less cell and an on-demand SSB, applicable to the method proposed in the present disclosure (e.g., Embodiment 1, Embodiment 2 and/or Embodiment 3), will be described.

A base station may configure/indicate, through an RRC message, a MAC-CE, and/or DCI (cell-common, cell-specific, UE group-common, or UE-specific), that a corresponding serving cell corresponds to an SSB-less cell and/or that an on-demand SSB is being operated. When the UE recognizes, through reception of the configuration/indication, that a corresponding serving cell corresponds to an SSB-less cell and/or that an on-demand SSB is being operated, the UE may not expect SSB reception through the corresponding serving cell and may transmit a UL signal/channel configured for an on-demand SSB for requesting an SSB in the corresponding serving cell.

Specifically, in the case of an SCell, such information may be transmitted through RRC signaling for configuring and/or adding the SCell and/or through an SCell activation MAC-CE. As an example, when configuring and/or adding a certain SCell through RRC signaling, the base station may inform the UE that the corresponding SCell corresponds to an SSB-less cell and that an on-demand SSB is being operated. As another example, when configuring and/or adding a certain SCell through RRC signaling, the base station may configure that the corresponding SCell corresponds to an SSB-less cell and that an on-demand SSB may be operated, and may indicate, through a MAC-CE, information on whether the corresponding SCell actually corresponds to an SSB-less cell and/or whether an on-demand SSB is being operated.

Based on the above-described signaling, when an SCell for which it is configured/indicated that it corresponds to an SSB-less cell and/or that an on-demand SSB is being operated is activated, an SSB may be transmitted on the corresponding SCell for a certain time T (e.g., the T value may be predefined or may be a value configured by a base station). Alternatively, whether the SSB is transmitted during the certain time T may be predefined or may be explicitly configured/indicated by RRC signaling or an (SCell activation) MAC-CE.

In this regard, configuration of a reference cell (ref-cell) corresponding to the SSB-less cell may be required, one or more candidates for the reference cell may be configured, and which cell is an actual reference cell may be configured/indicated through RRC signaling for configuring or adding the corresponding SSB-less cell or a MAC-CE (indicating activation).

Additionally or alternatively, different cells may be associated according to functions of the reference cell. As an example, a cell #A may be configured/indicated as a reference cell for timing synchronization and AGC setting of an SSB-less cell, a cell #B may be configured/indicated as a reference cell for UL power control (or path-loss estimation), and a cell #C may be configured/indicated as a reference cell for performing RRM measurement on behalf. Alternatively, a plurality of reference cells may be configured/indicated even for the same function.

For example, when two timing advances (TAs) are configured for an SSB-less SCell (e.g., in a multi-TRP scenario or during IAB operation), a reference cell for timing synchronization (and AGC setting) corresponding to each TA may be separately configured/indicated. As another example, depending on an UL signal/channel on the SSB-less SCell, a reference cell for UL power control (or path-loss estimation) (and a DL signal/channel transmitted in the corresponding reference cell) may be differently configured. As still another example, depending on a type of measurement, different reference cells (and DL signals/channels transmitted in the corresponding reference cells) may be differently configured. As a specific example, for RSRP, an SSB on cell #1 may be configured as a reference, and for L1-SINR, an SSB or a CSI-RS resource on cell #2 (or cell #1) may be configured as a reference.

Additionally or alternatively, one or more reference cells may be associated/configured/indicated for one SSB-less cell. In this case, a priority order for which cell among a plurality of associated reference cells is to be used to obtain timing synchronization, AGC setting, UL power control (or path-loss estimation), beam management-related measurement, and/or RRM measurement may be required. The priority order may be explicitly configured/indicated, or even when the priority order is high, if the corresponding reference cell is in an inactive state or a dormant BWP is operating, a cell corresponding to a next priority order may be substituted as the reference cell.

Such a priority order may be configured/defined at a signal/channel level rather than at a cell level. As an example, for a reference purpose of timing synchronization (and/or path-loss estimation) of an SSB-less SCell, an SSB of a PCell, a CSI-RS of the PCell (e.g., TRS), and a CSI-RS of the SCell (e.g., TRS) may be configured, and the SSB of the PCell may have the highest priority and the CSI-RS of the SCell may have the lowest priority, or a corresponding rule may be predefined.

A common reference cell may be configured/indicated for a plurality of SSB-less SCells, and for this purpose, the SSB-less SCells may be grouped. As an example, when SCell indices #0/1/2 are all configured/indicated as SSB-less SCells and belong to the same group, a reference cell corresponding to the SCells belonging to the same group may be common. In particular, when a reference cell is configured/indicated for one SCell among the SCells belonging to the same group, the corresponding reference cell may be automatically configured/indicated as a reference cell for other SCells within the same group.

Even when a reference cell corresponding to a specific SSB-less SCell (or a group to which the corresponding SCell belongs) is not configured, a default reference cell may be determined according to a rule. When the SSB-less SCell belongs to an MCG (master cell group), the default reference cell may be a PCell, and when the SSB-less SCell belongs to an SCG (secondary cell group), the default reference cell may be a PSCell. Alternatively, when the SSB-less SCell does not belong to a pTAG (primary timing advance group) but belongs to an sTAG (secondary timing advance group), an arbitrary SCell that belongs to the same sTAG and is not an SSB-less cell may be the default reference cell. Alternatively, a serving cell having the lowest/highest cell index may be the default reference cell.

In order to minimize system performance degradation due to operation of an SSB-less cell, an SSB-less cell operation may not be allowed for a PCell/PSCell/PUCCH-SCell (e.g., an SCell for which PUCCH transmission is configured)/PUCCH-sSCell (e.g., an SCell in which PUCCH may be transmitted due to PUCCH cell switching) in which PUCCH may be transmitted. In addition, for a similar purpose, an SCell configured/indicated as a reference cell of an SSB-less cell may not be allowed to be deactivated or to operate as a dormant BWP.

The UE may be configured with some or all of the following information for an on-demand SSB that may be transmitted on an SSB-less cell, and the information may be configured differently per BWP configured in the SSB-less cell or commonly across BWPs. For one of the following pieces of information, a plurality of candidate values may be predefined/configured, and one value among them may be configured/indicated through RRC signaling for configuring/adding the SSB-less cell or through a MAC-CE (for SCell activation).
- Period of the on-demand SSB: may refer to a (minimum) time interval at which the same SSB (candidate) index is transmitted, and when the period is not configured, a default value (e.g., 20 msec) may be predefined, or an SSB period configured in a reference cell may be applied as the period of the on-demand SSB on the corresponding SSB-less cell.
- Transmission duration of the on-demand SSB: the transmission duration may refer to a period from when the on-demand SSB starts to when the on-demand SSB ends on the SSB-less cell. As an example, when the on-demand SSB is transmitted P times with a period of X msec starting from slot #n on the SSB-less cell and is no longer transmitted and is turned off from slot #n+k, k slots (or an absolute time corresponding to the k slots or P) may be defined as the duration.
- Pattern information of the on-demand SSB: when a time/frequency structure between a legacy SSB and an on-demand SSB is different, information on such a compressed/simplified SSB pattern may be configured.
- Power value of the on-demand SSB: when path-loss estimation, CSI reporting, or the like should be performed through the corresponding SSB, a power value of the SSB may be required. When the power value is not configured, a predefined default value may be applied, or an SSB power value configured in a reference cell may be inherited and applied. In addition, when relative EPRE values among PSS/SSS/PBCH are different from those of an existing SSB, the corresponding relative EPRE values may also be additionally configured.
- Frequency resource (e.g., center frequency) position in which the on-demand SSB is transmitted
- Information on whether the on-demand SSB is an NCD-SSB (non-cell defining SSB) or a CD-SSB (cell defining SSB)

When a plurality of reference cells may be configured for an SSB-less cell, the above-described information corresponding to each reference cell may be separately configured.

Additionally, the above-described information may also be configured for an SSB transmitted during a certain time T after SCell activation as in Embodiment 1 described above.

FIG. 8 illustrates an on-demand SSB related procedure applicable to the present disclosure.

Referring to FIG. 8, a base station may configure an SSB-less cell, a reference cell, and/or an on-demand SSB based on the methods described above in the present disclosure (S810).

A UE may perform estimation for timing information and/or path-loss based on the reference cell (S820), and then may select and transmit one of configured on-demand SSB signals (S830). Here, the on-demand SSB signal may refer to a UL signal/channel for requesting an on-demand SSB.

The base station may receive the on-demand SSB signal and then may transmit an SSB signal corresponding thereto (S840).

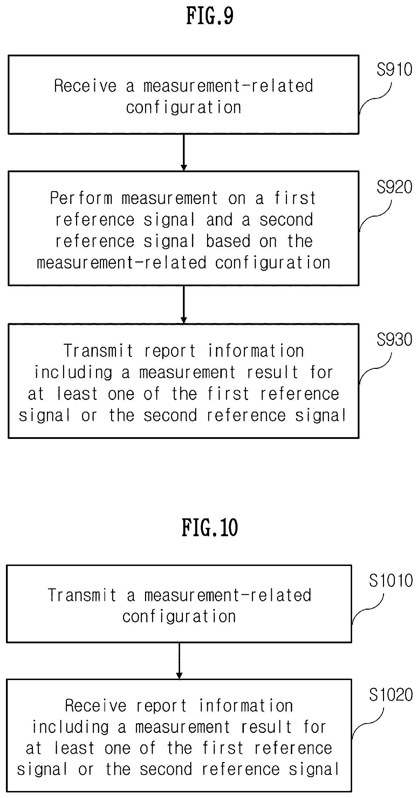

FIG. 9 and FIG. 10 illustrate operations of a UE and a base station performing measurement in consideration of an on-demand SSB according to the embodiments of the present disclosure described above.

FIG. 9 is a diagram illustrating the operation of a user equipment according to an embodiment of the present disclosure.

Referring to FIG. 9, a UE may receive a measurement-related configuration from a base station (S910).

In this regard, with respect to the corresponding measurement-related configuration, a first reference signal and a second reference signal may be configured (bundled) as the same measurement object. Here, the first reference signal may correspond to an on-demand synchronization signal block in a specific cell, and the second reference signal may correspond to a specific reference signal (e.g., a synchronization signal block, a reference signal related to channel state) based on a configuration different from a configuration for the on-demand synchronization signal block.

In addition, the first reference signal may be an on-demand synchronization signal block transmitted for a predetermined period based on a configuration or an indication, and the specific cell may correspond to a secondary cell (SCell) configured for the UE. Further, as an example, the specific cell may correspond to a cell to which a network energy saving mode is applied.

In this case, the first reference signal and the second reference signal may be reference signals transmitted from different cells.

Based on the above-described measurement-related configuration, the UE may perform measurement on the first reference signal and the second reference signal (S920).

For a quality report for a specific cell (e.g., a cell in which a first reference signal is transmitted), a UE may transmit report information including a measurement result for at least one of the first reference signal or the second reference signal (S930).

For example, even when reporting of a measurement result for the first reference signal and reporting of a measurement result for the second reference signal are (both/simultaneously) triggered, the above-described report information may include only one of the measurement result for the first reference signal and the measurement result for the second reference signal.

In this regard, according to an embodiment of the present disclosure, information related to a measurement report included in a measurement-related configuration may be commonly applied to the first reference signal and the second reference signal. For example, the information related to the measurement report may include information on at least one of a reporting period, a trigger timing, or a measurement event.

In addition, according to an embodiment of the present disclosure, the UE may receive information indicating to apply, to a measurement report for the specific cell, information related to a measurement report for a cell in which the second reference signal included in the measurement-related configuration is transmitted.

In addition, according to an embodiment of the present disclosure, a UE may receive a configuration for an on-demand synchronization signal block. As an example, the configuration for the on-demand synchronization signal block may include information on at least one of a period, a transmission duration, pattern information, a power value, or a frequency resource.

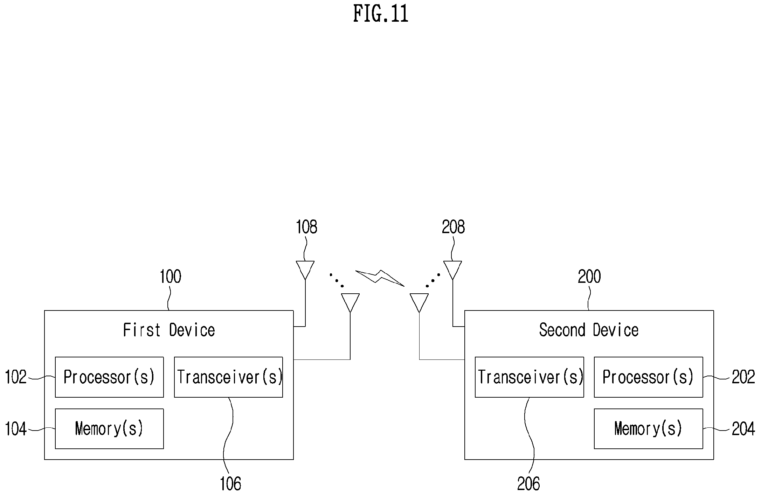

The method described in the example of FIG. 9 may be performed by a first device (100) of FIG. 11. That is, the UE of FIG. 11 may be implemented as the first device (100). For example, one or more processors (102) of the first device (100) of FIG. 11 may be configured to receive a measurement-related configuration through one or more transceivers (106), perform measurement on a first reference signal and a second reference signal based on the measurement-related configuration, and transmit report information including a measurement result for at least one of the first reference signal or the second reference signal with respect to a specific cell. Furthermore, one or more memories (104) of the first device (100) may store instructions for performing the method described in the example of FIG. 9 or the above-described examples when executed by the one or more processors (102).

FIG. 10 is a diagram illustrating the operation of a base station according to an embodiment of the present disclosure.

Referring to FIG. 10, a base station may transmit a measurement-related configuration to a UE (S1010), and, based on the measurement-related configuration, may receive report information including a measurement result for at least one of a first reference signal or a second reference signal with respect to a specific cell (S1020).

In this regard, the first reference signal and the second reference signal may be configured as the same measurement object in the measurement-related configuration. Here, the first reference signal may correspond to an on-demand synchronization signal block in the specific cell, and the second reference signal may correspond to a specific reference signal (e.g., a synchronization signal block, a reference signal related to channel state) based on a configuration different from a configuration for the on-demand synchronization signal block.

Detailed features regarding the first reference signal, the second reference signal, cells in which the respective reference signals are transmitted, the measurement-related configuration, reporting of the measurement result, and the like are the same as those described with reference to FIG. 9, and thus redundant description will be omitted.

The method described in the example of FIG. 10 may be performed by a second device (200) of FIG. 11. That is, the base station of FIG. 10 may be implemented as the second device (200). For example, one or more processors (202) of the second device (200) of FIG. 10 may be configured to transmit a measurement-related configuration through one or more transceivers (206), and, based thereon, receive report information including a measurement result for at least one of a first reference signal or a second reference signal with respect to a specific cell. Furthermore, one or more memories (204) of the second device (200) may store instructions for performing the method described in the example of FIG. 10 or the above-described examples when executed by the one or more processors (202).

### General Device to which the Present Disclosure may be applied

FIG. 11 illustrates a block diagram of a wireless communication device according to an embodiment of the present disclosure.

In reference to FIG. 11, a first wireless device 100 and a second wireless device 200 may transmit and receive a wireless signal through a variety of radio access technologies (e.g., LTE, LTE-A, LTE-A pro, NR, 5G, 5G-A, 6G).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure.

For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104.

A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

### [INDUSTRIAL APPLICABILITY]

A method proposed by the present disclosure is mainly described based on an example applied to 3GPP LTE/LTE-A, 5G, 6G system, but may be applied to various wireless communication systems other than the 3GPP LTE/LTE-A, 5G, 6G system.

## Claims

1. A method performed by a UE in a wireless communication system, the method comprising:
receiving a measurement-related configuration from a base station;
performing measurement on a first reference signal and a second reference signal based on the measurement-related configuration; and
transmitting, for a specific cell, report information including a measurement result for at least one of the first reference signal or the second reference signal,
wherein the first reference signal and the second reference signal are configured as a same measurement object in the measurement-related configuration,
wherein the first reference signal corresponds to an on-demand synchronization signal block in the specific cell, and the second reference signal corresponds to a specific reference signal based on a configuration different from a configuration for the on-demand synchronization signal block.

2. The method of claim 1,
wherein, based on reporting of a measurement result for the first reference signal and reporting of a measurement result for the second reference signal being triggered, the report information includes one of the measurement result for the first reference signal and the measurement result for the second reference signal.

3. The method of claim 1,
wherein the first reference signal is transmitted for a predetermined duration based on a configuration or an indication.

4. The method of claim 1,
wherein the specific cell corresponds to a secondary cell configured for the UE.

5. The method of claim 1,
wherein the first reference signal and the second reference signal are transmitted from different cells.

6. The method of claim 1,
wherein the specific reference signal corresponds to a synchronization signal block or a reference signal related to channel state configured in a cell different from the specific cell.

7. The method of claim 1,
wherein information related to a measurement report included in the measurement-related configuration is commonly applied to the first reference signal and the second reference signal, and
wherein the information related to the measurement report includes information on at least one of a reporting period, a trigger timing, or a measurement event.

8. The method of claim 1, further comprising:
receiving information indicating to apply, to a measurement report for the specific cell, information related to a measurement report for a cell in which the second reference signal included in the measurement-related configuration is transmitted.

9. The method of claim 1, further comprising:
receiving a configuration for the on-demand synchronization signal block,
wherein the configuration for the on-demand synchronization signal block includes information on at least one of a period, a transmission duration, pattern information, a power value, or a frequency resource.

10. The method of claim 1,
wherein the specific cell corresponds to a cell to which a network energy saving mode is applied.

11. An apparatus in a wireless communication system, the apparatus comprising:
one or more transceivers; and
one or more processors connected to the one or more transceivers,
wherein the one or more processors are configured to:
receive a measurement-related configuration from a base station;
perform measurement on a first reference signal and a second reference signal based on the measurement-related configuration; and
transmit, for a specific cell, report information including a measurement result for at least one of the first reference signal or the second reference signal,
wherein the first reference signal and the second reference signal are configured as a same measurement object in the measurement-related configuration,
wherein the first reference signal corresponds to an on-demand synchronization signal block in the specific cell, and the second reference signal corresponds to a specific reference signal based on a configuration different from a configuration for the on-demand synchronization signal block.

12. A method performed by a base station in a wireless communication system, the method comprising:
transmitting, to a UE, a measurement-related configuration; and
based on the measurement-related configuration, receiving, for a specific cell, report information including a measurement result for at least one of a first reference signal or a second reference signal,
wherein the first reference signal and the second reference signal are configured as a same measurement object in the measurement-related configuration,
wherein the first reference signal corresponds to an on-demand synchronization signal block in the specific cell, and the second reference signal corresponds to a specific reference signal based on a configuration different from a configuration for the on-demand synchronization signal block.

13. An apparatus in a wireless communication system, the apparatus comprising:
one or more transceivers; and
one or more processors connected to the one or more transceivers,
wherein the one or more processors are configured to:
transmit, to a UE, a measurement-related configuration; and
based on the measurement-related configuration, receive, for a specific cell, report information including a measurement result for at least one of a first reference signal or a second reference signal,
wherein the first reference signal and the second reference signal are configured as a same measurement object in the measurement-related configuration,
wherein the first reference signal corresponds to an on-demand synchronization signal block in the specific cell, and the second reference signal corresponds to a specific reference signal based on a configuration different from a configuration for the on-demand synchronization signal block.

14. A processing device configured to control a station (STA) in a wireless local area network (WLAN) system, the processing device comprising:
one or more processors; and
one or more computer memories operably connected to the one or more processors and storing instructions that, when executed by the one or more processors, cause the one or more processors to perform the method according to any one of claims 1 to 10.

15. A non-transitory computer-readable medium storing one or more instructions,
wherein the one or more instructions are executed by one or more processors to control an apparatus to perform the method according to any one of claims 1 to 10 in a wireless LAN system.
